# EUROPÄISCHE PATENTSCHRIFT

(11) **EP 0 417 582 B1**
(45) Veröffentlichungstag und Bekanntmachung des Hinweises auf die Patenterteilung: **16.03.1994**
(21) Anmeldenummer: 90116822.9
(22) Anmeldetag: 01.09.1990
(51) Int. Cl.: C04B 28/26, C04B 24/14, C04B 38/02

(54) **Verfahren zur Herstellung von offenporigem Schaum aus im wesentlichen anorganischen Bestandteilen**
Process for the manufacture of open-celled foam essentially of inorganic constituents
Procédé pour la fabrication d'une mousse à pores ouverts en constituants essentiellement mineraux

(30) Priorität: 12.09.1989 DE 3930501
(43) Veröffentlichungstag der Anmeldung: 20.03.1991
(73) Patentinhaber: HT TROPLAST AG, D-53839 Troisdorf (DE)
(72) Erfinder: Engels, Hans Werner, D-5210 Troisdorf (DE); Neuschäffer, Karlheinz, Dr., D-5653 Leichlingen (DE)

(56) Entgegenhaltungen:
- AT-A- 379 135
- CH-A- 372 968
- DE-C- 858 658
- GB-A- 1 578 470
- WORLD PATENTS INDEX LATEST Week 8506, Derwent Publications Ltd., London, GB; AN 85-034258 & JP-A-59 227 757 (M.FUJII) 21. Dezember 1984

## Beschreibung

Die Erfindung betrifft eine Formmasse - bzw. die aus mehreren Teilen bestehende Zusammenstellung der Komponenten - zur Herstellung eines festen Schaumprodukts entsprechend dem Oberbegriff des Anspruchs 1, das Verfahren zur Herstellung eines offenporigen, festen Schaumprodukts sowie das nach diesem Verfahren hergestellte offenporige Schaumprodukt.

Aus der EP-B1 0 148 280 (= US-A 4,533,393) sind Schaumstoffe mit geschlossenen Poren aus wasserhaltigen, härtbaren anorganischen Formmassen bekannt. Die Formmasse enthält eine Alkalisilikatlösung, Füllstoffe, Schäummittel und einen mit der Alkalisilikatlösung reaktionsfähigen Feststoff, der als amorphes, pulverförmiges Oxidgemisch mit Gehalten von amorphem Siliziumdioxid und Aluminiumoxid z. B. bei der Herstellung von Elektrokorund als Ofenfilterstaub anfällt.

Nach der EP-B1 0 199 941 (= US-A 4,681,631) können als weitere reaktionsfähige Feststoffe auch eine glasartig amorphe Elektrofilterasche mit 45 bis 60 Gew.-% SiO₂-Glas, 25 bis 35 Gew.-% Al₂O₃ neben Eisenoxid sowie gemahlener kalzinierter Bauxit verwendet werden, wobei die Elektrofilterasche aus HochtemperaturSteinkohlekraftwerken stammt. Auch Elektrofilterasche aus modernen Braunkohlekraftwerken ist als reaktionsfähiger Feststoff brauchbar sowie Metakaolin nach der FR-PS 2 512 805 und FR-PS 2 512 806, wobei dem Metakaolin ggf. Portlandzement zugesetzt sein kann.

Aus der EP-A1 0 324 968 (= WO 89/05783) ist eine Formmasse zur Herstellung eines anorganischen, geschlossenporigen Schaumprodukts bekannt, die durch Zusatz bestimmter Reaktionsbeschleuniger in kurzer Zeit aufschäumt und aushärtet. Als anorganische, steinbildende Komponente werden Oxidgemische mit Gehalten von amorphem SiO₂ und Aluminiumoxid, glasartig amorphe Elektrofilterasche, kalzinierter Bauxit oder ungelöstes amorphes SiO₂ aus einer amorphen, dispers-pulverförmigen Kieselsäure verwendet. Der Härter besteht aus einer wäßrigen Lösung von Alkalisilikaten.

Nur wenige solche mit Akalisilikatlösung reaktionsfähige Feststoffe konnten bisher gefunden werden, wobei die besondere Reaktionsfähigkeit eine aktive steinbildende Reaktion, z.B. unter Selbsterwärmung, und die Bildung von festen Formkörpern innerhalb kurzer Zeit auslöst.

Aus der GB-A-1 578 470 ist ein Verfahren zur Herstellung anorganischer geschäumter Wärmeisolations-Materialien bekannt, bei denen u. a. auch tierisches Protein als Schaumstabilisator eingesetzt wird.

Schließlich wird bei einem weiteren Verfahren zur Herstellung geschäumter anorganischer Produkte (DE-C-858 658 und CH-A-372 968) ein Eiweißprodukt mit Wasser gemischt, wonach durch Einschlagen von Luft oder anderen Gasen ein stabiler, geschlossenporiger Schlagschaum erzeugt wird, der als Träger-Schaum zur Aufnahme von Zement oder anderen aushärtenden anorganischen Materialien dient.

Die nach dem genannten Stand der Technik erzeugten Schaumstoffe sind stets geschlossenporig und daher u.a. zur Wärmedämmung und als Hitzeschutz einsetzbar.

Für bestimmte Einsatzgebiete werden jedoch offenporige Schaumprodukte bevorzugt, insbesondere für Schallschutzanwendungen, für Filter etc. Aufgabe der Erfindung ist es daher, eine gattungsgemäße Formmasse bzw. Zusammenstellung zur Herstellung offenporiger Schaumprodukte zur Verfügung zu stellen.

Die Erfindung löst diese Aufgabe durch den Zusatz von wenigstens teilweise alkalilöslichen Eiweißstoffen oder deren Abbauprodukten in einer zur Bildung eines offenporigen Schaumprodukts ausreichenden Menge.

Unter "Zusammenstellung" im Sinne der Erfindung wird die Summe der noch nicht (vollständig) vermischten Komponenten der Formmasse verstanden.

Es wurde nun überraschend gefunden, daß ausgehend von den gleichen eingangs beschriebenen reaktionsfähigen Feststoffen, Füllstoffen und Schäummitteln ein Schaum mit offenen Poren hergestellt werden kann, dessen Porengröße, Dichte und Struktur in Abhängigkeit von der Menge an Reaktanden und Eiweiß enthaltenden Zusatzstoffen einstellbar ist, wenn bestimmte pflanzliche oder tierische Produkte zugesetzt werden, die eine teilweise Löslichkeit des Eiweißes im alkalischen Medium aufweisen. Diese wenigstens teilweise alkalilöslichen, pflanzlichen oder tierischen Produkte bzw. ihre Verarbeitungsprodukte wirken während der Schäumungs - und Härtungsreaktion als die Wandbildung der Schaumporen unterbrechende "Porenöffner". Demgemäß können gas-, luft- und flüssigkeitsdurchlässige, harte Schaumstoffe hergestellt werden, die sich für vielseitige Verwendung eignen. Der Schaum mit offenen Poren hat in Abhängigkeit von Porengröße und Dichte schalldämmende Eigenschaften; er kann als Filtermaterial Verwendung finden oder wegen der großen Oberfläche als Träger von Katalysatoren oder Wirkstoffen. Die Porengröße und der Grad der Offenporigkeit ist einstellbar, so daß Schaumstoffe herstellbar sind, durch die Wasser o. dgl. rasch durchrinnt, oder Schaumstoffe mit einstellbarer Durchtrittsgeschwindigkeit für Gas, Luft oder Flüssigkeit. In an sich bekannter Weise können die Schäume mit offenen Poren bei niedriger Rohdichte durch Hydrophobieren, z.B. mit Silanen, schwimmfähig auf Wasser gemacht werden.

Als steinbildende Komponente wird erfindungsgemäß bevorzugt ein reaktiver Feststoff oder ein Feststoffgemisch aus der Gruppe
I feinteiliges Oxidgemisch mit Gehalten von amorphem Siliziumdioxid und Aluminiumoxid,
II glasartige, amorphe Elektrofilterasche,
III gemahlener, kalzinierter Bauxit
IV Elektrofilterasche aus Braunkohlekraftwerken,
V ungelöstes, amorphes SiO₂, insbesondere aus einer amorphen, dispers-pulverförmigen, entwässerten oder wasserhaltigen Kieselsäure oder aus Hochtemperaturprozessen (Silica Fume),
VI Metakaolin
eingesetzt, wobei der reaktive Feststoff bevorzugt mit einer als Härter wirkenden Alkalisilikatlösung mit 1,2 - 2,5 Mol SiO₂ je Mol K₂O und/oder Na₂O in exothermer, anorganischer Reaktion aushärtet.

Es hat sich überraschend herausgestellt, daß die Wirkung der wenigstens teilweise alkalilöslichen Eiweißstoffe als "Porenöffner" auch für die völlig andersartige Reaktion von Zement mit Wasser oder mit einer Alkalisilikatlösung auftritt. Auf diese Weise kann ein offenporiger Beton hergestellt werden.

Die erfindungsgemäße Formmasse enthält bevorzugt zusätzlich Füllstoffe wie Flugasche, Blähton, Perlit, Glimmer, Quarzmehl, Basaltmehl, Talkum, Foamglas oder dergleichen, bzw. deren Mischungen, bevorzugt in Mengen von bis zu 75 Gew.-%, insbesondere von 4-40 Gew.-%, bezogen auf den Gesamtansatz, bzw. bis zu 300 Gew.-Teilen, insbesondere von 5-100 Gew.-Teilen je 100 Gew.-Teile der steinbildenden Komponente.

Die steinbildende Komponente wird bevorzugt in einer Menge von 0,4 - 4 Gew.-Teile je Gew.-Teil der Alkalisilikatlösung eingesetzt.

Erfindungsgemäß werden als die Offenporigkeit bewirkende, tierische oder pflanzliche Produkte aus natürlicher Herkunft solche mit Gehalten von Proteinen bzw. Eiweißstoffen, welche teilweise in Alkali löslich sind, d.h. worin das Eiweiß teilweise in Alkali löslich ist, eingesetzt. Es handelt sich um tierische und pflanzliche Stoffe natürlicher Herkunft bzw deren mechanische oder chemisch abgewandelte bzw. verarbeitete Stoffe mit Gehalten von Proteinen. Als Beispiele seien genannt: Gluten, Glutelin, Sojaprotein, Casein, Gelatine, Albumin in reiner Form als der weiße Bestandteil des Hühnereis oder als Verarbeitungsprodukt, Getreidemehle und Mahlprodukte von Samen, wie besonders Mehle von Mais, Reis, Weizen, Roggen, Gerste, Hafer, Hirse, Soja oder anderen Hülsenfrüchten, Kleie, Getreidekeime, Milchpulver, Molke, Tierleim etc. Die Wirkung dieser Eiweiß enthaltenden, natürlichen pflanzlichen oder tierischen Produkte bzw. deren Verarbeitungsprodukte ist abhängig von der Natur des Eiweiß, wobei die beste Wirkung bei Eiweißstoffen mit hohem in Alkali löslichem Anteil auftritt. Weiterhin ist der Anteil von Protein bzw. Eiweiß im pflanzlichen oder tierischen Naturprodukt bzw. Verarbeitungsprodukt maßgeblich. Molke kann in natürlicher Form oder nach Anreicherung des Eiweiß verwendet werden. Sojaprotein oder Protein aus weiteren Hülsenfrüchten kann als Mahlgut oder als löslich-disperses Produkt bzw. als Fällungsprodukt verwendet werden. Mehle von Getreiden und Hülsenfrüchten sind wirksam und erfindungsgemäß einfach einsetzbar, setzen jedoch voraus, daß das Eiweiß nicht entfernt oder zu stark denaturiert wurde. Vernetzte Eiweißprodukte, z.B. durch Schwefelbrücken vernetztes Horn bzw. Haare sind alkaliunlöslich und nicht wirksam.

Eiweißprodukte können bekanntlich einen stabilen, geschlossenporigen "Schlagschaum" durch Einrühren von Luft oder anderen Gasen erzeugen, wirken jedoch in dem erfindungsgemäßen Verfahren gänzlich anders, nämlich durch Unterbrechung der Wandbildung von anorganischem Schaum zu offenen Poren. Die als "Porenöffner" angewendeten Eiweißstoffe können nach Herstellung der Schaumstoffe herausgelöst, herausgewaschen oder durch thermische Zersetzung entfernt werden. Es ist auch möglich, die begleitenden, nicht löslichen und nicht wirksamen Anteile, z.B. die in Mehlen enthaltene Stärke, durch thermische Zersetzung zu entfernen. Die chemische Beständigkeit des dünnwandigen Schaumstoffes gegen Säuren läßt sich durch an sich bekannte Hitzebehandlung erhöhen. Ein Zusatz von Faserstoffen als Verstärkung ist möglich.

Überraschenderveise kann aus dem bisher völlig geschlossenporigen Schaum durch Zusatz der Proteine enthaltenden Produkte als "Porenöffner" jeder Grad der Durchlässigkeit erreicht werden und sogar ein vollständig offenporiger Schaum, durch den Wasser durchrinnt und durchfließt, hergestellt werden.

Die Menge der zugesetzten Porenöffner ist stark abhängig von dem Eiweißgehalt und beispielsweise dem Anteil von Stärke in Mehlen. Bei Verwendung von Mehlen entsteht einerseits bei Zusatz von 75 g Getreidemehl je 10000 g der Formmasse ein noch weitgehend geschlossenporiger Schaum mit geringer Durchlässigkeit, während andererseits bei 125 bis 500 g Mehlzusatz, je nach Eiweißgehalt, ein offenporiger Schaum entsteht. Die Zusatzmengen sind bei Porenöffnern mit hohem Gehalt von alkalilöslichen Proteinen, wie beispielsweise Eiklar, Molkekonzentrat, Milcheiweiß, Gelatine und Casein, geringer und liegen im Bereich von 30 bis 200 g Porenöffner je 10000 g verarbeitungsfähiger Formmasse.

Die Menge der Zusatzmittel ist demgemäß gering im Verhältnis zu ihrer Wirkung als Porenöffner. Bei Mehlen sind große Zusatzmengen über 600 g je 10000 g Formmasse unzweckmäßig, weil die Wirkung des Eiweiß in jedem Fall ausreicht und Stärke ggf. aus dem fertigen Produkt durch Ausschwemmen zu entfernen ist.

Der Eiweißgehalt in Mehlen von Getreiden oder Hülsenfrüchten schwankt stark und kann zwischen beispielsweise 1 und 18 Gew.-% liegen.

Im allgemeinen sind daher die Porenöffner bereits dann wirksam, wenn mit diesen Gehalte von 20 bis 200 g Eiweiß, vorzugsweise 60 bis 150 g Eiweiß je 10000 g Masse der fertigen Formmasse zugesetzt werden.

Die Verschäumungsmittel und deren Mengen sind aus dem Stand der Technik bekannt, wobei einerseits Peroxide, vorzugsweise Wasserstoffperoxid in wäßriger Lösung, Natriumperborat und ggf. weitere Peroxide bzw. bei Zersetzung sauerstoffabgebende Mittel in vergleichsweise großen Mengen möglich sind und andererseits durch Alkali zersetzbares Metallpulver, wie insbesondere Aluminium, in vergleichsweise kleinen Mengen zugesetzt werden kann.

Wird ein Feststoff als Verschäumungsmittel eingesetzt, insbesondere Aluminiumpulver, wird es im trockenen Zustand unter den reaktionsfähigen Feststoff gemischt. Beim Einsatz von H₂O₂ als Verschäumungsmittel wird dieses jedoch erst als letzte Komponente zugegeben.

### Beispiele

### Vergleichsbeispiel A

4200 g einer alkalischen Silikatlösung, die 52 Gew.-% Wasser sowie Silikat und Alkali in einem Molverhältnis von 1,5 SiO₂ pro Mol Alkalioxid (Na₂O und K₂O in gleicher Molmenge) enthält, wird mit 3360 g Ofenfilterstaub aus einer Elektrokorundfertigung als Oxidgemisch mit Gehalten von amorphem SiO₂ und Al₂O₃ und als Füllstoffe 740 g Glimmer und 1100 g Talkum zu einer gleichmäßigen Suspension verrührt.

Nach Zugabe von 450 g einer 10 gew.-%igen Wasserstoffperoxid-Lösung schäumt die Masse in kurzer Zeit auf und härtet unter Eigenerwärmung in 30 bis 45 min. zu einem Schaumstoff mit geschlossenen Poren.

### Beispiel 1

Zu der Formmasse nach dem Vergleichsbeispiel A werden vor der Zugabe des Treibmittels
a) 150 g verschiedener Getreidemehle, nämlich Weizenmehl Typen 405, 550, 801 und 1050, Roggenmehl Typen 997, 1150 und 1370, Maismehl oder Reismehl zugemischt. Es entstehen offenporige Schaumkörper einer Rohdichte zwischen 250 und 300 kg/m³.
b) Es werden wie unter a) die dort genannten Getreidemehle, jedoch in Mengen von 250 g vor der Zugabe des Treibmittels eingemischt. Es entstehen offenporige Schaumkörper einer Rohdichte von 340 bis 380 kg/m³.

Alle Schaumkörper bestehen aus offenporigem Schaum, der zwischen allen Blasen Verbindungskanäle aufweist und welcher luftdurchlässig bzw. wasserdurchlässig ist.

### Beispiel 2

Der Suspension nach Vergleichsbeispiel A werden 500 g Weizenmehl zugemischt und nach Zugabe von 480 g Natriumperborat als Treibmittel entsteht ein offenporiger gehärteter Schaum mit einer Dichte von 500 kg/m³.

### Beispiel 3

Die Suspension nach Vergleichsbeispiel A wird mit 500 g Reismehl vermischt und darauf mit 14 g Aluminiumpulver als Treibmittel zu einem offenporigen Schaum von 470 kg/m³ Dichte gehärtet.

### Beispiel 4

4200 g Alkalisilikatlösung gemäß Vergleichsbeispiel A werden mit 2100 g Metakaolin, 340 g Glimmer und 550 g Talkum sowie 500 g Roggenmehl vermischt und mit 500 g Natriumperborat als Treibmittel versetzt. Nach Temperaturerhöhung auf 50° C härtet ein offenporiger Schaum einer Rohdichte von 380 kg/m³ aus.

### Beispiel 5

Vergleichsbeispiel A wird mit den Mengen der dort genannten Alkalisilikatlösung, im reaktionsfähigen Feststoff und in Füllstoffen wiederholt, wobei jeweils 500 g eines Eiweiß enthaltenden Stoffes als Porenöffner zugemischt und anschließend 10 gew.-%ige Wasserstoffperoxidlösung in der unten genannten Menge zugegeben wird. Es entsteht ein stets offenporiger Schaum mit einer von der Menge Wasserstoffperoxidlösung abhängenden Rohdichte des Schaums:
a) Bei Verwendung von Reismehl oder Maismehl als Porenöffner und 200 g der Wasserstoffperoxidlösung entsteht ein Schaum von 600 kg/m³ Rohdichte.
b) Bei Verwendung von einerseits gemahlener Gelatine und andererseits Casein und von 600 g der genannten Wasserstoffperoxidlösung entsteht ein offenporiger Schaum von 520 kg/m³ Rohdichte.

### Beispiel 6

4200 g Alkalisilikatlösung gemäß Vergleichsbeispiel A, 4050 g Elektrofilterasche eines Braunkohlekraftwerkes und zusätzlich 150 g kalzinierter Bauxit als reaktionsfähige Feststoffe mit 740 g Glimmer und 1100 g Talkum als Füllstoffe werden
a) mit 200 g,
b) mit 500 g
Weizenmehl mit 10 % Zusatz von Sojamehl gemischt und in verschiedenen Versuchen mit 400 g, mit 500 g und mit 600 g 10 gew.-%iger Wasserstoffperoxidlösung versetzt. Es entstehen durch exotherme Reaktion härtende offenporige Schäume von mit ansteigender Menge Mehl ansteigender Rohdichte und von mit steigender Menge Wasserstoffperoxidlösung sinkender Rohdichte im Bereich von 120 bis 600 kg/m³.

### Beispiel 7

Bei Zusatz von 75 g des im Beispiel 6 genannten Mehls und der dortigen Formmasse entsteht ein Schaum, der weitgehend geschlossenporig ist und durch offene Poren nur noch eine geringe Luftdurchlässigkeit besitzt.

Ohne Zusatz des Eiweißstoffe enthaltenden Mehls wird ein Schaum mit geschlossenen Poren erhalten.

### Beispiel 8

5,46 kg Portlandzement werden mit 270 g Weizenmehl Typ 405 innig vermischt. Anschließend wird durch Zugabe von 3,94 kg einer Alkalisilikatlösung entsprechend Beispiel 1 eine Suspension hergestellt, die mit 330 g 10 Gew.-%igem Wasserstoffperoxid aufgeschäumt wird. Es entsteht ein offenporiges Schaumprodukt.

### Vergleichsbeispiel 9

Es wird wie im Beispiel 8 ein Schaumprodukt gefertigt, wobei der Zusatz von Weizenmehl entfällt. Das entstehende Schaumprodukt ist geschlossenzellig.

## Patentansprüche

1. Formmasse oder aus mehreren Teilen bestehende Zusammenstellung der Komponenten zur Herstellung eines festen Schaumproduktes,
- mit einer anorganischen, steinbildenden Komponente,
- einer wasserhaltigen zweiten Komponente, die die Härtungsreaktion der steinbildenden Komponente im alkalischen Bereich bewirkt,
- sowie mit einer schaumbildenden Komponente,
***gekennzeichnet durch*** den Zusatz von wenigstens teilweise alkalilöslichen Eiweißstoffen oder deren wenigstens teilweise alkalilöslichen Abbauprodukten in einer zur Bildung eines offenporigen Schaumprodukts ausreichenden Menge.

2. Formmasse oder Zusammenstellung nach Anspruch 1, ***dadurch gekennzeichnet***, daß die steinbildende Komponente einen oder mehrere reaktionsfähige Feststoffe aus der Gruppe
I feinteiliges Oxidgemisch mit Gehalten von amorphem Siliziumdioxid und Aluminiumoxid,
II glasartige, amorphe Elektrofilterasche,
III gemahlener kalzinierter Bauxit,
IV Elektrofilterasche aus Braunkohlekraftwerken,
V ungelöstes, amorphes SiO₂, insbesondere aus einer amorphen, dispers-pulverförmigen, entwässerten oder wasserhaltigen Kieselsäure oder aus Hochtemperaturprozessen (Silica Fume),
VI Metakaolin
VII Zement
enthält.

3. Formmasse oder Zusammenstellung nach einem der Ansprüche 1 oder 2, ***dadurch gekennzeichnet***, daß als wasserhaltige zweite Komponente (Härter) eine Alkalisilikatlösung mit 1,2 bis 2,5 Mol SiO₂ je Mol K₂O und/oder Na₂O eingesetzt wird.

4. Formmasse oder Zusammenstellung nach einem der Ansprüche 1 bis 3, ***gekennzeichnet durch*** einen Füllstoffgehalt von 5 bis 100 Gew.-Teilen je 100 Gew.-Teile der steinbildenen Komponente.

5. Formmasse oder Zusammenstellung nach Anspruch 3, ***dadurch gekennzeichnet***, daß 0,4 - 4,0 Gew.-Teile der steinbildenen Komponente je Gew.-Teil der Alkalisilikatlösung enthalten sind.

6. Verfahren zur Herstellung eines offenporigen, festen Schaumproduktes, ***gekennzeichnet durch*** die Verwendung von wenigstens teilweise alkalilöslichen Eiweißstoffen oder deren wenigstens teilweise alkalilöslichen Abbauprodukten in einer zur Bildung offener Poren ausreichenden Menge in einer Formmasse, enthaltend eine anorganische, steinbildende Komponente, eine wasserhaltige zweite Komponente, die die Härtungsreaktion der steinbildenden Komponente im alkalischen Bereich bewirkt, und eine schaumbildende Komponente.

7. Offenporiges Schaumprodukt, hergestellt durch ein Verfahren nach Anspruch 6.

## Claims

1. Moulding material, or combination in several parts of components, for preparation of a solid foam product,
- having an inorganic stone-forming component,
- a water containing second component which achieves the hardening reaction of the stone-forming component in the alkaline range,
- as well as having a foam forming component,
characterised by the addition of at least partially alkali soluble albumen materials or of at least partially alkali soluble proteolysis products thereof in an amount sufficient for formation of an open pored foam product.

2. Moulding material or combination according to claim 1, characterised in that the stone-forming component contains one or several reactive solids from the group
I finely divided oxide mixture with contents of amorphous silicon dioxide and aluminium oxide,
II vitreous amorphous electrofilter ash,
III ground calcined bauxite,
IV electrofilter ash from lignite power stations,
V undissolved amorphous SiO₂, in particular from an amorphous dispersion powder form, dewatered or water containing silicic acid or from high temperature processes (silica fume),
VI metakaolin
VII cement.

3. Moulding material or combination according to one of claims 1 or 2, characterised in that an alkali silicate solution with 1.2 to 2.5 mol SiO₂ per mol K₂O and/or Na₂O is employed as water containing second component (hardener).

4. A moulding material or combination according to one of claims 1 to 3, characterised by a filler content of 5 to 100 parts by weight per 100 parts by weight of the stone-forming component.

5. Moulding material or combination according to claim 3, characterised in that there are contained 0.4 to 4.0 parts by weight of the stone-forming component per part by weight of the alkali silicate solution.

6. Process for the production of an open pore, solid foam product, characterised by the use of at least partially alkali soluble albumin materials or their at least partially alkali soluble proteolysis products in an amount sufficient for the formation of open pores in a moulding material containing an inorganic stone-forming component, a water soluble second component which achieves the hardening reaction of the stone-forming component in the alkaline range, and a foam forming component.

7. Open pore foam products, produced by the process according to claim 6.

## Revendications

1. Masse à mouler, ou composition de composants en plusieurs parties, destinée à la fabrication d'un produit moussé solide, comportant
- un composant minéral lithogène,
- un deuxième composant contenant de l'eau, qui cause la réaction de durcissement du composant lithogène en milieu alcalin, et
- un composant moussant,
caractérisée en ce qu'on y a ajouté des protides au moins partiellement solubles en milieu alcalin ou de leurs produits de dégradation au moins partiellement solubles en milieu alcalin, en une quantité suffisante pour la formation d'un produit moussé à cellules ouvertes.

2. Masse à mouler ou composition conforme à la revendication 1, caractérisée en ce que le composant lithogène contient une ou plusieurs des matières solides réactives de l'ensemble que constituent :
I) un mélange d'oxydes, finement divisé et contenant du dioxyde de silicium amorphe et de l'oxyde d'aluminium,
II) de la cendre d'électrofiltre, vitreuse et amorphe,
III) de la bauxite calcinée et broyée,
IV) de la cendre d'électrofiltre provenant de centrales fonctionnant au lignite,
V) de la silice amorphe, insoluble, provenant en particulier d'un acide silicique amorphe, hydraté ou déshydraté, en poudre dispersée, ou de procédés mis en oeuvre à haute température (silice fumée),
VI) du métakaolin, et
VII) du ciment.

3. Masse à mouler ou composition conforme à la revendication 1 ou 2, caractérisée en ce que l'on utilise, en tant que deuxième composant contenant de l'eau (durcisseur), une solution d'un silicate alcalin comportant de 1,2 à 2,5 moles de SiO₂ par mole de K₂O et/ou Na₂O.

4. Masse à mouler ou composition conforme à l'une des revendications 1 à 3, caractérisée en ce qu'elle contient de 5 à 100 parties en poids de charges pour 100 parties en poids de composant lithogène.

5. Masse à mouler ou composition conforme à la revendication 3, caractérisée en ce qu'elle contient de 0,4 à 4,0 parties en poids de composant lithogène pour 1 partie en poids de solution de silicate alcalin.

6. Procédé de fabrication d'un produit moussé solide à cellules ouvertes, caractérisé en ce que l'on utilise des protides au moins partiellement solubles en milieu alcalin, ou de leurs produits de dégradation au moins partiellement solubles en milieu alcalin, en une quantité suffisante pour la formation de cellules ouvertes, dans une masse à mouler contenant un composant minéral lithogène, un deuxième composant contenant de l'eau, qui cause la réaction de durcissement du composant lithogène en milieu alcalin, et un composant formateur de mousse.

7. Produit moussé à cellules ouvertes, fabriqué selon un procédé conforme à la revendication 6.
